# EUROPEAN PATENT SPECIFICATION

(11) **EP 1 669 202 B1**
(45) Date of publication and mention of the grant of the patent: **14.01.2009**
(21) Application number: 05110617.7
(22) Date of filing: 07.02.2000
(51) Int. Cl.: G03G 15/23, B41J 13/22, B41F 21/10, F16C 33/76, F16L 27/08

(54) **Duplex printing system**
Drucksystem für zweiseitiges Bedrucken
Système d'impression à double face

(30) Priority: 07.11.1999 WO PCT/IL99/00600; 06.02.2000 IL 13440700
(43) Date of publication of application: 14.06.2006
(62) Divisional of application: 00902841.6
(73) Proprietor: Hewlett-Packard Indigo B.V., 6221 SH Maastricht (NL)
(72) Inventor: Landa, Benzion, 76101, Rehovot (IL); Shmaiser, Aron, 76101, Rehovot (IL); Rosen, Yosef, 76101, Rehovot (IL); Lewinz, Lior, 76101, Rehovot (IL); Korol, Yevgeny, 76101, Rehovot (IL); Feygelman, Alex, 76101, Rehovot (IL); Gazit, Alon, 76101, Rehovot (IL)
(74) Representative: Lippich, Wolfgang

(56) References cited:
- EP-A- 1 055 832
- US-A- 4 165 689
- US-A- 4 202 268
- US-A- 4 844 138
- US-A- 5 110 159
- US-A- 5 552 875
- US-A- 5 642 946

## Description

### FIELD OF THE INVENTION

The invention relates to printing systems and in particular to duplex printing systems for printing images on one or both sides of a sheet.

### BACKGROUND OF THE INVENTION

Duplex printers and sheet transport systems for duplex printers that print both sides of a sheet and reference printing on each side of a sheet to a same edge of the sheet are known.

PCT application PCT/IL98/00553 (corresponding to WO 9961958 A) describes a sheet transport system for a duplex printer that prints both sides of a sheet on a same impression roller. The publication also describes a sheet transport system for a tandem duplex printer that prints each sides of a sheet on a different impression roller.

The transport system, hereinafter referred to as a "re-feed transport system", for the printer that prints both sides of the sheet on a same impression roller receives a sheet from the impression roller after a first side of the sheet is printed. If the second side of the sheet is to be printed, it turns the sheet over and feeds it back to the impression roller for printing the second side. The position of the sheet on the impression roller when the sheet's second side is being printed is registered to the position of the sheet's leading edge. If the second side of the sheet is not to be printed, the transport system moves the sheet to an output tray.

The transport system comprises a sheet transporter and a conveyor belt. The sheet transporter, hereinafter referred to as a "perfector", operates to turn the sheet over and register the position of sheet on the impression roller to the leading edge of the sheet. The perfector comprises a first and second set of vacuum pick up arms. Each of the arms of the first set of arms is mounted to a same shaft and rotate with the shaft. Each of the arms of the second set of arms is mounted to an annulus that rotates about the shaft to which the arms of the first set of arm are attached. Each of the annuli is coupled by its own transmission belt to a drive shaft that rotates all the arms of the second set of arm together. The first and second sets of vacuum arms operate sequentially one after the other to repeatedly remove a printed sheet from the impression roller. When removing a sheet from the impression roller, a set of vacuum arms rotates in a direction opposite to the direction of rotation of the impression roller to a hand off position between the perfector and the impression roller. At the hand off position the set of vacuum arms grips the sheet by an edge of the sheet and rolls the sheet off the impression roller. If the sheet is printed on a first side, the edge that is gripped is a leading edge of the sheet, to which edge printing on the first side is referenced. If the sheet being removed from impression roller is to be printed on its second side, the set of vacuum arms places the sheet, printed side face up, on the conveyor and reverses its direction of rotation. Motion of the conveyor belt and the reverse rotation of the set of vacuum arms feed the sheet back to the impression roller trailing edge first. The set of vacuum arms grips the leading edge of the sheet until a gripper on the impression roller grips the trailing edge and the sheet begins to roll up on the impression roller. As a result, the position of the sheet on the impression roller is registered to the leading edge of the sheet and printing of the second side of the sheet is referenced to the same leading edge to which printing on the first side of the sheet is registered.

PCT application PCT/IL99/00600 (corresponding to WO 0134397 A) filed on 07-Nov-99 and entitled " Tandem Printing System with Fine Paper-Position Correction", describes a sheet transport system and a sheet fine position control system for a tandem printer that prints each side of a sheet on a different impression roller. The described sheet "tandem" transport system described herein is similar to the tandem sheet transport system described in PCT application PC7/IL98/00553.

The transport system of this application transports a sheet from a first impression roller of the printer, on which a first side of the sheet is printed referenced to a leading edge of the sheet, to a second impression roller of the printer, on which a second side of the sheet is printed. The transport system registers a trailing edge of the sheet to the leading edge so that the position of the sheet on the second impression roller is registered with respect to the leading edge. Printing on the second side of the sheet is therefore referenced to the same leading edge to which printing on the first side of the sheet is referenced.

The sheet transport system comprises a plurality of rotating sheet transporters. Each transporter comprised in the transport system comprises a rotatable shaft and preferably at least one array of suction cups that are mounted to the shaft for gripping a sheet. The transporter also preferably comprises at least one surface, hereinafter referred to as a "support surface", for supporting a sheet that is gripped and held by the transporter's suction cups.

The transporters seriatim receive and hand off one to the other a sheet being transported by the transport system from the first impression to the second impression roller. A first transporter, hereinafter referred to as a "picker", functions to remove a sheet from the first impression roller. The picker grips a leading edge of the sheet that it removes from the impression roller and hands off the leading edge to an adjacent transporter, hereinafter referred to as a "perfector". The perfector turns over the sheet that it receives and hands off a *trailing* edge of the sheet to a next transporter, hereinafter referred to as a "transfer transporter". The transfer transporter in turn hands off the trailing edge of the sheet to a feed roller that feeds the sheet to the second impression roller, which grips the sheet by the trailing edge.

In turning the sheet over, the perfector reverses its direction of rotation between clockwise and counterclockwise rotation and adjusts its speed of rotation so that when the trailing edge of the sheet is handed off to the transfer transporter, the trailing edge is registered to the leading edge. As a result, when the sheet is passed to the second impression roller, the sheet's position on the second impression roller is registered to the leading edge of the sheet, even though the second impression roller grips the sheet by the trailing edge of the sheet.

### SUMMARY OF THE INVENTION

The present invention according to claim 1 relates to providing an improved re-feed transport system for a duplex printer that prints both sides of a sheet on a same impression roller and to providing a re-feed sheet transport system comprising an improved perfector.

A re-feed sheet transport system, in accordance with a preferred embodiment of the present invention, is similar to the re-feed sheet transport system described in the above referenced PCT application PCT/IL98/00553. The transport system comprises a perfector that removes sheets from the printer's impression roller and if the sheet is to be printed on a second side places the sheet on a conveyor that guides the sheet back to the impression roller. The perfector registers a trailing edge of the sheet to its leading edge so that the position of the sheet on the impression roller when the sheet's second side is being printed is registered to the sheet's leading edge. However, the transport system of the present application comprises a perfector having an improved construction.

A perfector in accordance with a preferred embodiment of the present invention comprises first and second interleaved rotary arms that rotate about a common axis of rotation. Each rotary arm, hereinafter referred to as a "pick and place" arm, preferably comprises a linear array of suction cups and at least one support surface. The first and second pick and place arms operate to remove sheets from the impression roller after they are printed similarly to the way in which the first and second sets of vacuum pick-up arms of the perfector descried in PCT application PCT/IL98/00553 operate.

Each pick and place arm rotates to a pick off position between the perfector and the impression roller at which position it grips an edge of a sheet being printed. If a sheet removed by a pick and place does not require printing on a second side, the pick and place hands off the sheet to an adjacent transporter that moves the sheet towards an output tray. If the sheet requires printing on a second side, the edge of the sheet that the pick and place grips at the pick off position is a leading edge of the sheet and the pick and place places the sheet on the moving conveyor belt, printed surface face up. The pick and place arm then reverses its direction of rotation and together with the conveyor belt guides the sheet back to the impression roller, trailing edge first, for printing on the second side. The pick and place arm does not release the leading edge until the impression roller grips the trailing edge. The pick and place thereby maintains registration of the trailing edge of the sheet to the leading edge of the sheet. The pick and place arms operate sequentially one after the other to repeatedly pick a printed sheet off the impression roller and place it on the conveyor or hand it off towards the output tray.

When a pick and place removes a sheet from the impression roller, in accordance with a preferred embodiment of the present invention, the sheet rolls off the impression roller and onto the at least one support surface of the pick and place. The at least one support surface contributes to a smooth roll off of the sheet from impression roller and to reducing fluctuations in a force with which the pick and place arm pulls the sheet off the impression roller. The at least one support surface substantially reduces damage to the sheet from kinking or wrinkling of the sheet in regions near to suction cups of the pick and place.

According to an aspect of some preferred embodiments of the present invention a re-feed sheet transport system comprises at least one fan positioned to create airflow that presses the sheet flat to the conveyor belt surface. By pressing the sheet flat to the surface of the conveyor the accuracy with which the trailing edge of the sheet is registered to the leading edge of the sheet is improved.

Proper operation of an transport system in accordance with a preferred embodiment of the present invention requires controlling suction cups on the various transporters so that they suck and release air at appropriate times. The suction cups, which are mounted to rapidly rotating shafts, must therefore be connected to appropriate vacuum pumps and valves.

Methods for transmitting pressure or vacuum to devices mounted to a rotating shaft are known in the art. The devices are connected to appropriate channels in the shaft which in turn are connected to desired vacuum pumps, pressure pumps and valves, hereinafter referred to collectively or individually as "pressure devices".

If one or two channels are needed, a channel is formed at one end or at both ends of the shaft and the end or ends of the shaft are connected to a desired pressure device by a rotary joint.

There is provided, in accordance with the present invention, a sheet transport system for a printer that receives a sheet from an impression roller of the printer on which a first side of the sheet is printed referenced to a leading edge of the sheet and if the sheet is to be printed on its second side turns the sheet over and returns the sheet to the impression roller, comprising: a conveyor belt that feeds a sheet placed thereon to the impression roller; a perfector that removes a sheet from the impression roller after a first side of the sheet is printed and if a second side of the sheet is to be printed, places the sheet on the conveyor belt, and if a second side is not to be printed moves the sheet towards a printer output tray, the perfector comprising:
first and second brackets independently rotatable about a same axis;
a plurality of suction cups mounted on each of the first and second brackets;
at least one sheet support surface mounted on each bracket; and
a system that rotates the brackets sequentially, one after the other remove printed sheets from the impression roller and either place the sheet on the conveyor or move the sheet towards the output tray.

Preferably, the at least one support surface comprised in a bracket is a relatively long narrow surface defined by a plane curve whose plane is perpendicular to the axis about which the first and second brackets rotate and wherein the radial distance from the axis to a point on the curve decreases as the distance of the point from the bracket increases. Preferably, the at least one support surface of the first bracket is axially displaced from the at least one support surface of the second bracket.

Some preferred embodiments of the present invention comprise a fan that creates an airflow that presses a sheet placed on the conveyor belt to the conveyor belt surface.

### BRIEF DESCRIPTION OF FIGURES

The invention will be more clearly understood from the following description of preferred embodiments thereof read with reference to figures attached hereto. In the figures, identical structures, elements or parts that appear in more than one figure are generally labeled with the same numeral in all the figures in which they appear. Dimensions of components and features shown in the figures are chosen for convenience and clarity of presentation and are not necessarily shown to scale. The figures are listed below.
Fig. 1 schematically shows in perspective view a perfector transporter comprising two pick and place arms, in accordance with the present invention;
Figs. 2A-2F show the operation of a re-feed perfector transport system comprising a perfector transporter similar to that shown in Fig. 1, in accordance with the present invention; and

### DETAILED DESCRIPTION OF PREFERRED EMBODIMENTS

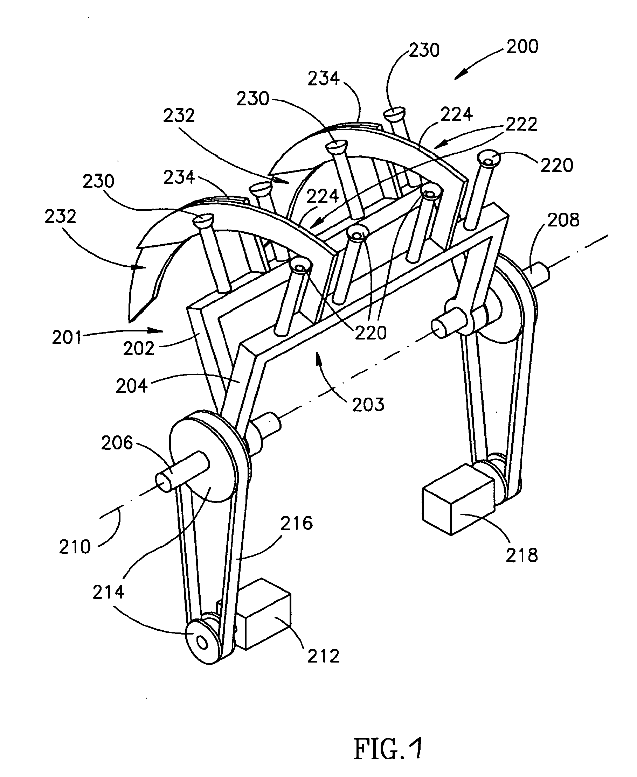

Fig. 1 schematically shows in a perspective view a perfector 200 for use with a duplex printing machine that prints both sides of a sheet on a same impression roller.

Perfector 200 preferably comprises two pick and place arms 201 and 203 preferably having bracket arms 202 and 204 respectively. Bracket arms 202 and 204 are rotatably mounted, preferably on two pin shafts 206 and 208, so that each bracket arm is independently rotatable about a same axis 210. Bracket arm 202 is preferably fixed to pin shaft 208 and rotatable about pin shaft 206. Similarly bracket arm 204 is preferably fixed to pin shaft 206 and rotatable about pin shaft 208.

Pin shaft 206 is coupled to a motor 212 preferably via pulleys 214 and a transmission belt 216. Preferably transmission belt 212 is a timing belt and pulleys 214 are splined pulleys. Bracket arm 204 rotates about axis 210 when motor 212 rotates pin shaft 206. Similarly, pin shaft 208 is coupled to a motor 218 that controls the rotation of pin shaft 208 and thereby the rotation of bracket arm 202 about axis 210.

Bracket arm 204 is mounted with a plurality of suction cups 220 and preferably at least two crescent structures 222 having sheet support surfaces 224. By way of example, bracket arm 204 is mounted with four suction cups 220 and two crescents 222. Preferably, a crescent 222 is mounted between each outer pair of suction cups 220. The radial distances of all suction cups 220 from axis 210 are preferably equal. Preferably, the radial distance of a region of a support surface 224 from axis 210 decreases slightly as the distance of the region from bracket arm 204 increases.

A channel inside bracket arm 204 communicates with suction cups 220 and is connected to a suitable vacuum system using methods known in the art, which controls aspiration of suction cups 220. Bracket arm 202 is preferably similarly mounted with suction cups 230 and crescents 232 having sheet support surfaces 234. Suction cups 230 and sheet support surfaces 234 lie on the same circularly cylindrical surface on which suction cups 220 and sheet support surfaces 224 lie. Crescent 222 and 232 are displaced from each other in a direction parallel to axis 210 so that bracket arms 204 and 202 can be rotated so that they are close to each other. When bracket arms 204 and 202 are close, crescents 222 interleave with crescents 232. The decrease in radial distance of regions of sheet support surfaces 224 and 234 prevents a sheet being held by one pick and place arm from being abraded by the sheet support surface of the other pick and place arm when the two pick and place arms are close together.

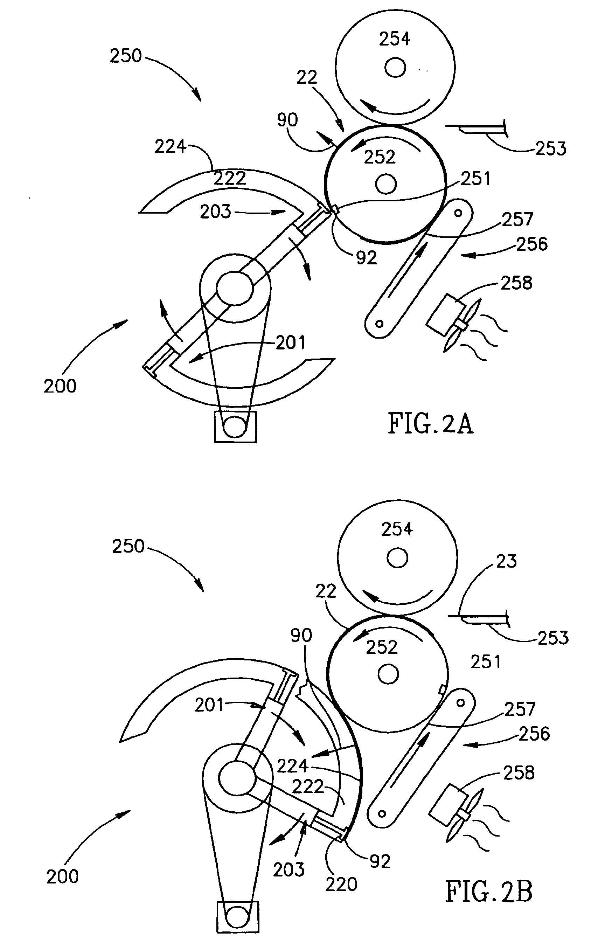

Figs. 2A-2F schematically show side views of a sheet transport system 250 and illustrate its operation, in accordance with a preferred embodiment of the present invention. Figs 2A-2F show sheet transport system removing a sheet from an impression roller 252 of a printer (not shown) after a first side of the sheet is printed, turning the sheet over and returning the sheet to impression roller 252 for printing a second side of the sheet. A roller 254 represents any suitable device for printing an image on a sheet held on impression roller 252. Since the image on the two sides of the sheet are generally different, the printing device is preferably a digital printing device such as an electrophotographic device. Roller 254 may be, for example, an intermediate transfer member of a printer.

Referring to Fig. 2A, sheet transport system 250 comprises the perfector 200 shown in a perspective view in Fig. 1, a conveyor belt 256 having a surface 257 and at least one fan 258. An arrow inside conveyor 256 indicates a direction of motion of surface 257. A first side of a sheet 22 is being printed on impression roller 252 as it rolls onto impression roller 252 from a feed tray 253. A gripper 251 on impression roller 252 holds a leading edge 92 of sheet 22. An arrow 90 indicates the printed side of sheet 22. Bold curved arrows on pick and place arms 201 and 203, hereinafter "arms 201 and 203", indicate direction of rotation of the arms, which are both moving clockwise. Suction cups 220 of pick and place arm 203 are approaching a hand off position between impression roller 252 and perfector 200.

At the handoff position suction cups 220 of arm are controlled to aspirate and grip leading edge 92. As arm 203 and impression roller 252 continue rotating after suction cups 220 grip leading edge 92, sheet 22 rolls off impression roller 252 and onto sheet support surfaces 224 of arm 203.

Fig. 2B shows transport system 250 after a substantial portion of sheet 22 has rolled onto sheet support surfaces 224 and a next sheet 23 is being fed to impression roller 252. Sheet support surfaces 224 contribute to a smooth roll off of sheet 22 from impression roller 252 and to reducing fluctuations in a force with which arm 203 pulls sheet 22 off impression roller 252. Support surfaces 224 also substantially reduce damage to sheet 22 from kinking or wrinkling of the sheet in regions near to suction cups 220. As arm 201 and impression roller 252 continue to rotate sheet 22 leaves impression roller 252 and is drawn by airflow created by fan 258 to conveyor surface 257.

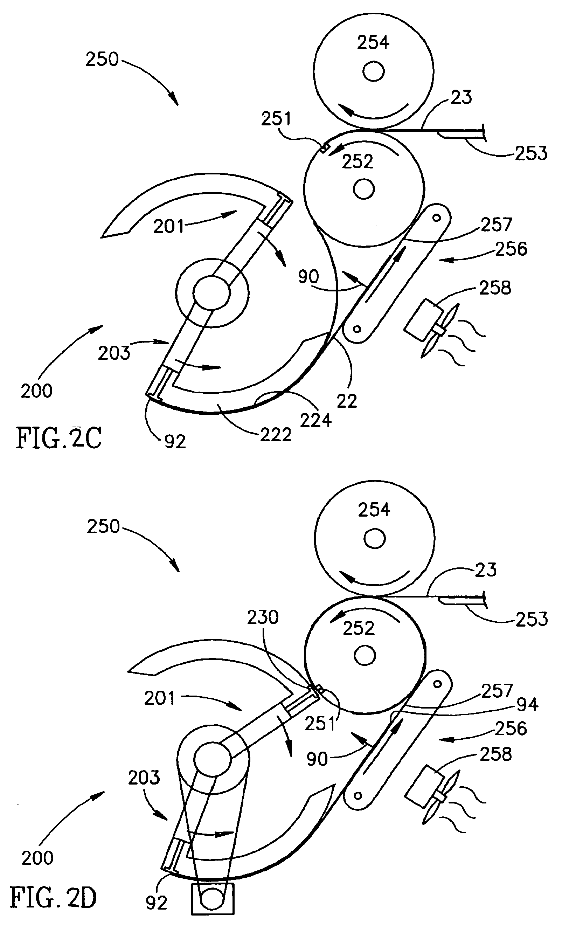

Fig. 2C shows sheet 22 and positions of arms 201 and 203 at a time at which sheet 22 has just rolled completely off impression roller 252 and lies flat on conveyor surface 257. At this time arm 201 reverses its direction of rotation so that it rotates counterclockwise and moves sheet 22 in the direction of motion of conveyor surface 257 so that a trailing edge 94 of sheet 22 approaches a hand off position between conveyor 257 and impression roller 252. Airflow from fan 258 and the motion of conveyor surface 257 substantially prevent "billowing" of sheet 22 on conveyor surface 257 and maintain relatively accurate registration of the position of trailing edge 94 to the position of leading edge 92.

Gripper 251 holds a leading edge of sheet 23 which is being printed on impression roller 252 and arm 201 is rotating clockwise to pick up the leading edge at the handoff position between impression roller 252 and perfector 200.

In Fig. 2D arm 201 is beginning to remove sheet 23 from impression roller 252 and suction cups 230 of arm 201 are gripping the leading edge of sheet 23 which is being released by gripper 251. Arm 203 is still moving counterclockwise and together with conveyor belt surface 257 are moving trailing edge 94 of sheet 22 to meet gripper 251.

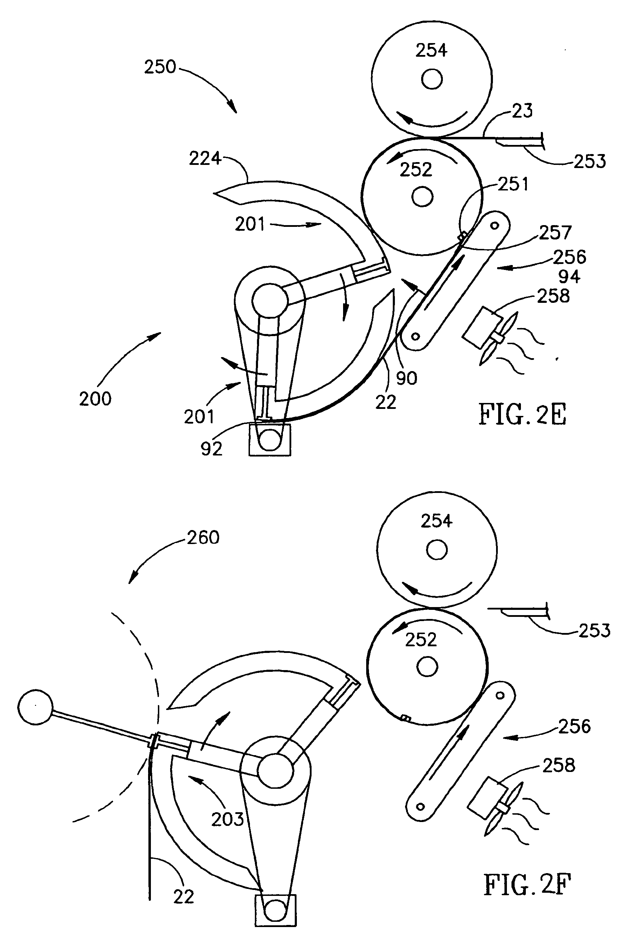

In Fig. 2E trailing edge 94 has reached the hand off position between conveyor surface 257 and impression roller 252. Gripper 251 is gripping trailing edge 94 of sheet 22 and sheet 22 is beginning to roll onto impression roller 252 with its first printed side face down on the roller. Suction cups 230 are releasing leading edge 92 of sheet 22 and arm 203 is reversing its direction of rotation so that it rotates clockwise and returns to impression roller 252 to pick up a next sheet from the impression roller. As sheet 22 rolls onto impression roller 252 its second side will be printed.

The next sheet that arm 203 removes from impression roller 252 is again sheet 22, but this time after the second side of sheet 22 is printed. Arm 203 does not of course return sheet 22 to impression roller 252 after the sheet's second side is printed. Instead of placing sheet 22 on conveyor surface 257 and reversing its direction of rotation from clockwise to counterclockwise arm 203 continues clockwise rotation and passes sheet 22 to a sheet transporter that moves sheet 22 towards an out tray. Fig. 2F shows arm 203 handing off sheet 22 after the second side of the sheet has been printed to a transporter 260 that moves the sheet towards an out tray.

A re-feed transport system, in accordance with a preferred embodiment of the present invention, comprised in a printing that prints both sides of a sheet on a same impression roller transports sheets at a rate such that a side of a sheet is printed with every rotation of the printer's impression roller.

In the description and claims of the present application, each of the verbs, "comprise" "include" and "have", and conjugates thereof, are used to indicate that the object or objects of the verb are not necessarily a complete listing of members, components, elements or parts of the subject or subjects of the verb.

The present invention has been described using detailed descriptions of preferred embodiments thereof that are provided by way of example and are not intended to limit the scope of the invention. The described preferred embodiments comprise different features, not all of which are required in all embodiments of the invention. Some embodiments of the present invention utilize only some of the features or possible combinations of the features. Variations of embodiments of the present invention that are described and embodiments of the present invention comprising different combinations of features noted in the described embodiments will occur to persons of the art. The scope of the invention is limited only by the following claims.

## Claims

1. A sheet transport system (250) for a printer that receives a sheet (22) from an impression roller (252) of the printer on which a first side of the sheet (22) is printed referenced to a leading edge of the sheet (22) and if the sheet (22) is to be printed on its second side, turns the sheet (22) over and returns the sheet (22) to the impression roller (252), comprising:
a conveyor belt (256) that feeds a sheet (22) placed thereon to the impression roller (252);
a perfector (200) that removes a sheet (22) from the impression roller (252) after a first side of the sheet (22) is printed and if a second side of the sheet (22) is to be printed, places the sheet (22) on the conveyor belt (256), and if a second side is not to be printed, moves the sheet (22) towards a printer output tray, the perfector (200) comprising:
first and second brackets (202, 204) independently rotatable about a same axis;
a plurality of suction cups (220, 230) mounted on each of the first and second brackets (202, 204);
at least one sheet support surface (224) mounted on each bracket (202, 204); and
a system that rotates the brackets (202, 204) sequentially, one after the other to remove printed sheets (22) from the impression roller (252) and either place a removed sheet on the conveyor (256) or move the sheet (22) towards the output tray.

2. A sheet transport system (250) according to claim 1 wherein at least one support surface (224) mounted on a bracket (202, 204) is a relatively long narrow surface defined by a plane curve whose plane is perpendicular to the axis about which the first and second brackets (202, 204) rotate and wherein the radial distance from the axis to a point on the curve decreases as the distance of the point from the bracket (202, 204) increases.

3. A sheet transport system (250) according to claim 2 wherein the at least one support surface (224) of the first bracket (202) is axially displaced from the at least one support surface (224) of the second bracket (204).

4. A sheet transport system (250) according to any of claims 1-3 and comprising a fan (258) that creates airflow that presses a sheet (22) placed on the conveyor belt (256) to the conveyor belt surface (257).

## Patentansprüche

1. Blatttransportanordnung (250) für einen Drucker, die ein Blatt (22) von einer Druckwalze (252) des Druckers empfängt, auf welchem eine erste Seite des Blattes (22) in Bezug auf eine vordere Kante des Blattes (22) bedruckt ist, und wenn das Blatt (22) auf seiner zweiten Seite bedruckt werden soll, das Blatt (22) umdreht und das Blatt (22) zur Druckwalze (252) zurückgibt, umfassend:
ein Förderband (256), das ein Blatt (22), welches darauf platziert wird, der Druckwalze (252) zuführt;
einen Perfektor (200), der das Blatt (22) von der Druckwalze (252) entfernt nachdem eine erste Seite des Blattes (22) bedruckt ist und wenn eine zweite Seite des Blattes (22) bedruckt werden soll, das Blatt (22) auf das Förderband (256) platziert, und wenn eine zweite Seite nicht bedruckt werden soll, das Blatt (22) zum Druckerausgabeschacht bewegt, wobei der Perfektor (200) folgendes umfasst:
einen ersten und einen zweiten Halter (202, 204), die um eine gleiche Achse unabhängig rotierbar sind;
mehrere Saugnäpfe (220, 230), die auf jedem des ersten und zweiten Halters (202, 204) angebracht sind;
wenigstens eine Blattauflagefläche (224), die auf jedem Halter (202, 204) angebracht ist; und
eine Anordnung, welche die Halter (202, 204) sequentiell rotiert, einen nach dem anderen, um bedruckte Blätter (22) von der Druckwalze (252) zu entfernen und entweder ein entferntes Blatt auf das Förderband (256) zu platzieren oder das Blatt (22) zum Ausgabeschacht zu bewegen.

2. Blatttransportanordnung (250) nach Anspruch 1, wobei wenigstens eine Auflagefläche (224), die auf einem Halter (202, 204) montiert ist, eine relativ lange schmale Fläche ist, die durch eine ebene Kurve definiert ist, deren Ebene senkrecht zu der Achse ist, um welche der erste und zweite Halter (202, 204) rotieren und wobei der radiale Abstand von der Achse zu einem Punkt auf der Kurve mit zunehmendem Abstand des Punktes von dem Halter (202, 204) abnimmt.

3. Blatttransportanordnung (250) nach Anspruch 2, wobei die wenigstens eine Auflagefläche (224) des ersten Halters (202) von der wenigstens einen Auflagefläche (224) des zweiten Halters (204) axial versetzt ist.

4. Blatttransportanordnung (250) nach einem der Ansprüche 1-3 und umfassend einen Lüfter (258), der einen Luftstrom erzeugt, der das auf dem Förderband (256) platzierte Blatt (22) gegen die Förderbandoberfläche (257) drückt.

## Revendications

1. Système de transport de feuille (250) pour une imprimante qui reçoit une feuille (22) à partir d'un rouleau d'impression (252) de l'imprimante sur lequel un premier côté de la feuille (22) est imprimé de façon référencée à un bord avant de la feuille (22) et si la feuille (22) doit être imprimée sur son second côté, retourne la feuille (22) et renvoie la feuille (22) jusqu'au rouleau d'impression (252), comprenant :
■ une courroie de transport (256) qui fait avancer une feuille (22) placée sur celle-ci jusqu'au rouleau d'impression (252) ;
■ une presse à retiration (200) qui retire une feuille (22) à partir du rouleau d'impression (252) après qu'un premier côté de la feuille (22) est imprimé et si un second côté de la feuille (22) doit être imprimé, place la feuille (22) sur la courroie de transport (256), et si un second côté ne doit pas être imprimé, déplace la feuille (22) vers un plateau de sortie d'imprimante, la presse à retiration (200) comprenant :
■ des premier et second supports (202, 204) rotatifs indépendamment autour du même axe ;
■ une pluralité de ventouses (220, 230) montées sur chacun des premier et second supports (202, 204) ;
■ au moins une surface de support de feuille (224) montée sur chaque support (202, 204) ; et
■ un système qui fait tourner les supports (202, 204) séquentiellement, l'un après l'autre pour retirer des feuilles imprimées (22) à partir du rouleau d'impression (252) et placer une feuille retirée sur la courroie de transport (256) ou bien déplacer la feuille (22) vers le plateau de sortie.

2. Système de transport de feuille (250) selon la revendication 1, dans lequel au moins une surface de support (224) montée sur un support (202, 204) est une surface étroite relativement longue définie par une courbe de plan dont le plan est perpendiculaire à l'axe autour duquel les premier et second supports (202, 204) tournent et dans lequel la distance radiale à partir de l'axe jusqu'à un point sur la courbe diminue au fur et à mesure que la distance du point à partir du support (202, 204) augmente.

3. Système de transport de feuille (250) selon la revendication 2, dans lequel l'au moins une surface de support (224) du premier support (202) est déplacée de façon axiale à partir de l'au moins une surface de support (224) du second support (204).

4. Système de transport de feuille (250) selon l'une quelconque des revendications 1 à 3, et comprenant un ventilateur (258) qui crée un écoulement d'air qui comprime une feuille (22) placée sur la courroie de transport (256) sur la surface de courroie de transport (257).
